# EUROPEAN PATENT APPLICATION

(11) **EP 1 758 401 A2**
(43) Date of publication of application: **28.02.2007**
(21) Application number: 06253497.9
(22) Date of filing: 04.07.2006
(51) Int. Cl.: H04N 7/26, H04N 7/50, H04N 7/36

(54) **Preprocessing for using a single motion compensated interpolation scheme for different video coding standards**

(30) Priority: 24.08.2005 KR 20050078034
(71) Applicant: Samsung Electronics Co., Ltd., Suwon-si, Gyeonggi-Do (KR)
(72) Inventor: Kim, Hyeyun, Bundang-gu, Seongnam-si, Gyeonggi-do (KR); Lee, Shihwa, Gangnam-gu, Seoul (KR); Kim, Ji-hoon, Suwon-si, Gyeonggi-do (KR); Park, Jaesung, Gwonseon-gu, Suwon-si, Gyeonggi-do (KR); Lee, Sangjo, Suwon-si, Gyeonggi-do (KR); Chung, Hyeyeon, Suwon-si, Gyeonggi-do (KR); Kim, Doohyun, Yongsan-gu, Seoul (KR)
(74) Representative: Greene, Simon Kenneth

(57) **Abstract**

Provided are a video prediction apparatus and method for a multi-format codec and a video encoding/decoding apparatus and method using the video prediction apparatus and method. The video prediction apparatus that generates a prediction block based on a motion vector and a reference frame according to a plurality of video compression formats includes an interpolation pre-processing unit and a common interpolation unit. The interpolation pre-processing unit receives video compression format information of a current block to be predicted, and extracts a block of a predetermined size to be used for interpolation from the reference frame and generates interpolation information using the motion vector. The common interpolation unit interpolates a pixel value of the extracted block or a previously interpolated pixel value in an interpolation direction according to the interpolation information to generate the prediction block.

## Description

The present invention relates to a video prediction apparatus and method, and more particularly, to a video prediction apparatus and method to implement a multi-format codec by using interpolation common to multiple video compression formats and a video encoding/decoding apparatus and method using the a video prediction apparatus and method.

There are various video compression algorithms, i.e., video compression formats such as WMV9, MPEG-4, and H.264, and a detailed encoding/decoding algorithm varies from format to format. In general, a decoding algorithm suitable for a particular video compression format extracts a motion vector from a received bitstream, generates a current prediction frame using a reference frame that has been already reconstructed and the extracted motion vector, and reconstructs a current frame using the generated prediction frame and residual data included in the bitstream.

In such a video decoding process, the generation of a prediction frame, i.e., a prediction process occupies up to 30% of the entire decoding process. Interpolation during prediction occupies up to 80% of the entire prediction process. Moreover, in a currently required multi-codec decoder, i.e., a decoder supporting all of the video compression formats WMV9, MPEG-4, and H.264, developing a method for implementing a separate prediction process for each of the video compression formats increases the time and cost required for the development. Thus, there is a need to reduce the time and cost required for the development through interpolation common to all video compression formats.

Additional aspects and/or advantages of the invention will be set forth in part in the description which follows and, in part, will be apparent from the description, or may be learned by practice of the invention.

The present invention provides a video prediction apparatus and method for a multi-format codec, in which the time and cost required for implementation of an encoder/decoder for the multi-format codec can be minimized by using an interpolation method common to video compression formats.

The present invention also provides a video encoding/decoding apparatus and method using a video prediction apparatus and method for a multi-format codec in which the time and cost required for implementation of an encoder/decoder for the multi-format codec may be reduced by using an interpolation method common to video compression formats.

According to an aspect of the present invention, there is provided a video prediction apparatus for a multi-format codec which generates a prediction block based on a motion vector and a reference frame according to each of a plurality of video compression formats. The video prediction apparatus includes an interpolation pre-processing unit and a common interpolation unit. The interpolation pre-processing unit receives video compression format information on a current block to be predicted, and extracts a block of a predetermined size to be used for interpolation from the reference frame and generates interpolation information using the motion vector. The common interpolation unit interpolates a pixel value of the extracted block or a previously interpolated pixel value in an interpolation direction according to the interpolation information to generate the prediction block.

The interpolation pre-processing unit may extract the block of the predetermined size using an integer part and a fractional part of the motion vector and generate the interpolation information using the fractional part of the motion vector.

The interpolation information may include interpolation mode information indicating whether interpolation is to be performed in a corresponding interpolation direction and operation parameter information required for interpolation in the corresponding interpolation direction. The common interpolation unit may determine an interpolation direction using the interpolation mode information, extract a plurality of pixel values of the extracted block or previously interpolated pixel values along the determined interpolation direction, and perform interpolation on the extracted plurality of pixel values according to the operation parameter information, thereby calculating a pixel value included in the prediction block.

The interpolation information may further include relative position information of pixels used for interpolation in the corresponding interpolation direction, and the common interpolation unit may extract the plurality of pixel values of the extracted block or previously interpolated pixel values using the relative position information.

The operation parameter information may include at least one of a weight vector including weights applied to pixels used for interpolation in the corresponding interpolation direction, rounding-off information required for a weighted sum operation using the weights, and shift amount information, and the common interpolation unit may perform the weighted sum operation by applying the weights to the extracted plurality of pixel values, and round-off the result of the weighted sum operation and perform an integer shift operation using the rounding-off information and the shift amount information in the corresponding interpolation direction.

The common interpolation unit may perform a clipping operation of substituting a predetermined value for data resulting from the integer shift operation and exceeding a predetermined range and outputs clipped data.

The common interpolation unit may comprise a first vertical interpolation unit and a horizontal interpolation unit. The first vertical interpolation unit performs one of bypassing and outputting a pixel value of the extracted block and outputting a pixel value interpolated through vertical interpolation using the pixel value of the extracted block, according to the interpolation mode information. The horizontal interpolation unit performs one of bypassing and outputting an output of the first vertical interpolation unit and performing horizontal interpolation using an output of the first vertical interpolation, according to the interpolation mode information. The first vertical interpolation unit and the horizontal interpolation unit perform interpolation according to the operation parameter information.

The common interpolation unit may comprise a second vertical interpolation unit, a bilinear interpolation unit, and a first data selection unit. The second vertical interpolation unit performs one of bypassing and outputting an output of the horizontal interpolation unit and performing vertical interpolation using the pixel value of the extracted block or an output of the horizontal interpolation unit, according to the interpolation mode information. The bilinear interpolation unit extracts two pixels adjacent to a pixel to be interpolated from pixels of the extracted block and interpolated pixels according to the interpolation mode information, and performs arithmetic averaging interpolation on the extracted two pixels. The first data selection unit selects an output of the second vertical interpolation unit or an output of the bilinear interpolation unit according to the interpolation mode information and outputs the selected data as a pixel value of a prediction block. The second vertical interpolation unit performs interpolation using operation parameter information that is the same as used in the first vertical interpolation unit.

The bilinear interpolation unit may comprise a second data selection unit and an arithmetic averaging unit. The second data selection unit selects the pixel value of the extracted block, the output of the first vertical interpolation unit, or the output of the horizontal interpolation unit according to the interpolation mode information, and outputs the selected data. The arithmetic averaging unit extracts the two pixels from the output of the second data selection unit and the output of the second vertical interpolation unit and performs arithmetic averaging on the extracted two pixels.

The horizontal interpolation unit, the second vertical interpolation unit, and the bilinear interpolation unit may extract a pixel to be used for interpolation using the relative position information.

The second vertical interpolation unit may perform a clipping operation of substituting a predetermined value for the pixel value of the extracted block or the vertically interpolated pixel value exceeding a predetermined range and outputs clipped data, and the second data selection unit may perform a clipping operation of substituting a predetermined value for the selected data exceeding a predetermined range and outputs clipped data.

According to another aspect of the present invention, there is provided a video prediction method for a multi-format codec, in which a prediction block is generated based on a motion vector and a reference frame according to a plurality of video compression formats. The video prediction method includes receiving video compression format information of a current block to be predicted, and extracting a block of a predetermined size to be used for interpolation from the reference frame and generating interpolation information using the motion vector and interpolating a pixel value of the extracted block or a previously interpolated pixel value in an interpolation direction according to the interpolation information to generate the prediction block.

The interpolation information may include interpolation mode information indicating whether interpolation is to be performed in a corresponding interpolation direction and operation parameter information required for interpolation in the corresponding interpolation direction, and the interpolation of the pixel value may include determining an interpolation direction using the interpolation mode information, extracting a plurality of pixel values of the extracted block or previously interpolated pixel values along the determined interpolation direction, and performing interpolation on the extracted plurality of pixel values according to the operation parameter information, thereby calculating a pixel value included in the prediction block.

According to still another aspect of the present invention, there is provided a video encoder for a multi-format codec. The video encoder includes a motion vector calculation unit and a block prediction unit. The motion vector calculation unit calculates a motion vector by performing block-based motion estimation between a reference frame and a current block to be encoded. The block prediction unit generates a prediction block based on the calculated motion vector and the reference frame. The block prediction unit includes an interpolation pre-processing unit and a common interpolation unit. The interpolation pre-processing unit receives video compression format information of a current block to be predicted, and extracts a block of a predetermined size to be used for interpolation from the reference frame and generates interpolation information using the motion vector. The common interpolation unit interpolates a pixel value of the extracted block or a previously interpolated pixel value in an interpolation direction according to the interpolation information to generate the prediction block.

According to yet another aspect of the present invention, there is provided a video encoding method for a multi-format codec. The video encoding method includes calculating a motion vector by performing block-based motion estimation between a reference frame and a current block to be encoded and generating a prediction block based on the calculated motion vector and the reference frame. The generation of the prediction block includes receiving video compression format information of a current block to be predicted, and extracting a block of a predetermined size to be used for interpolation from the reference frame and generating interpolation information using the motion vector and interpolating a pixel value of the extracted block or a previously interpolated pixel value in an interpolation direction according to the interpolation information to generate the prediction block.

According to yet another aspect of the present invention, there is provided a video decoder for a multi-format codec. The video decoder includes a motion vector extraction unit and a block prediction unit. The motion vector extraction unit reconstructs a motion vector from a received bitstream and the block prediction unit generates a prediction block based on the reconstructed motion vector and the reference frame. The block prediction unit includes an interpolation pre-processing unit and a common interpolation unit. The interpolation pre-processing unit receives video compression format information of a current block to be predicted, and extracts a block of a predetermined size to be used for interpolation from the reference frame and generates interpolation information using the motion vector. The common interpolation unit interpolates a pixel value of the extracted block or a previously interpolated pixel value in an interpolation direction according to the interpolation information to generate the prediction block.

According to yet another aspect of the present invention, there is provided a video decoding method for a multi-format codec. The video decoding method includes reconstructing a motion vector from a received bitstream and generating a prediction block based on the reconstructed motion vector and the reference frame. The generation of the prediction block includes receiving video compression format information of a current block to be predicted, and extracting a block of a predetermined size to be used for interpolation from the reference frame and generating interpolation information using the motion vector and interpolating a pixel value of the extracted block or a previously interpolated pixel value in an interpolation direction according to the interpolation information to generate the prediction block.

These and/or other aspects and advantages of the invention will become apparent and more readily appreciated from the following description of the embodiments, taken in conjunction with the accompanying drawings of which:

The above and other features and advantages of the present invention will become more apparent by describing in detail exemplary embodiments thereof with reference to the attached drawings in which:
FIGS. 1A through 1D are conceptual views of blocks extracted from an 8x8 integer block, for explaining interpolation methods used in WMV9, MEPG-4, H.264-Luma, and H.264-Chroma;
FIG. 2 is a block diagram of a video prediction apparatus for a multi-format codec according to an embodiment of the present invention;
FIG. 3 is a block diagram of a video prediction apparatus for a multi-format codec which can be used for WMV9-Bilinear, WMV9-Bicubic, MPEG-4, H.264-Luma, and H.264-Chroma;
FIGS. 4A through 4E illustrate tables for obtaining interpolation information in H.264-Luma, H.264-Chroma, WMV9-Bilinear, WMV9-Bicubic, and MPEG-4;
FIG. 5 is a flowchart illustrating a process of determining whether a corresponding interpolation unit performs interpolation according to interpolation mode information;
FIG. 6 is a block diagram of a bilinear interpolation unit according to an embodiment of the present invention;
FIG. 7 is a flowchart illustrating a video prediction method for a multi-format codec according to an embodiment of the present invention;
FIG. 8 illustrates a table indicating Idirection used in interpolation units;
FIG. 9 is a block diagram of a video encoder for a multi-codec format according to an embodiment of the present invention;
FIG. 10 is a flowchart illustrating a video encoding method for a multi-codec format according to an embodiment of the present invention;
FIG. 11 is a block diagram of a video decoder for a multi-codec format according to an embodiment of the present invention; and
FIG. 12 is a flowchart illustrating a video decoding method for a multi-codec format according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

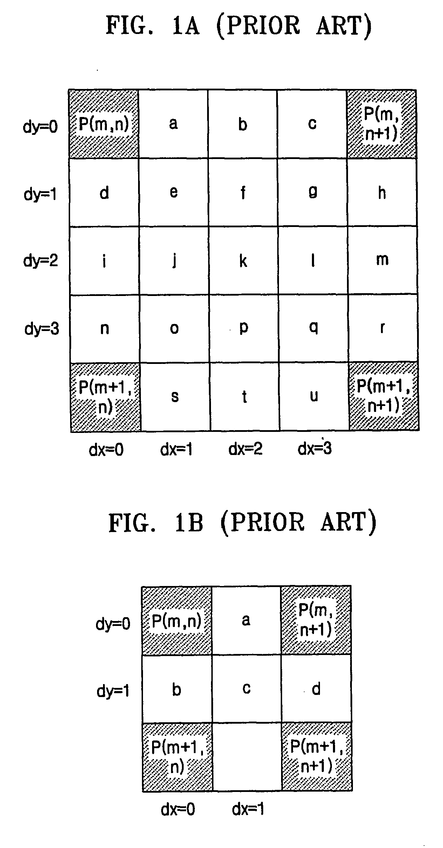

FIG. 1A is a conceptual view of a block extracted from an 8x8 integer block, for explaining interpolation methods used in WMV9, MPEG-4, H.264-Luma, and H.264-Chroma;

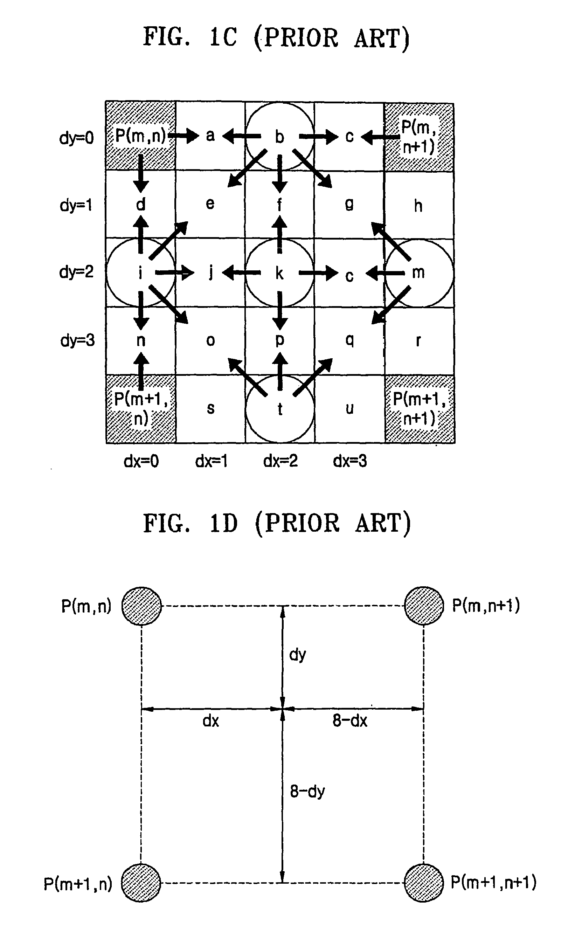

Since WMV9 processes 8x8 blocks, interpolation is performed in 1/4 pixel units for each 8x8 block. Gray pixels shown in FIG. 1 indicate integer pixels of the extracted block and have pixel values P(m,n), P(m,n+1), P(m+1,n), and P(m+1,n+1), respectively.

First, an interpolation method used in WMV9-Bilinear will be described. A pixel value of a pixel i is given by (P(m,n) + P(m+1,n) + 1 - R) >> 1, a pixel value of a pixel t is given by (P(m+1,n) + P(m+1,n+1) + 1 - R) >> 1, and a pixel value of a pixel k is given by (P(m,n) + P(m+1,n) + P(m+1,n) + P(m+1,n+1) + 2 - R) >> 2. Here, ">>" indicates an integer shift operation where, for example, >>n indicates that something is divided by 2ⁿ. Here, R is 0 in the case of an I-frame and alternately is 0, 1, 0, 1 in the case of a P-frame.

Next, an interpolation method used in WMV-Bicubic will be described. First, one-dimensional Bicubic interpolation is performed on pixels a, b, c, d, i, n, s, t, u, h, m, and r. Pixel values of the pixels d, i, and n can be given by (-4 * P(m-1,n) + 53*P(m,n) + 18*P(m+1,n) ― 3*P(m+2,n) + 32 - r) >> 6, (-1*P(m-1,n) + 9*P(m,n) + 9*P(m+1,n) - 1*P(m+2,n) + 8 - r) >> 4, and (-3*P(m-1,n) + 18*P(m,n) + 53*P(m+1,n) - 4*P(m+2,n) + 32 - r) >> 6, respectively. Here, r is equal to 1-R in vertical interpolation and is equal to R in horizontal interpolation, and R is 0 in the case of an I-frame and alternately is 0, 1, 0, and 1 in the case of a P-frame. In other words, since vertical interpolation is performed on the pixels d, i, and n, r is equal to 1-R.

Next, 2D Bicubic interpolation is performed on pixels e, f, g, j, k, l, o, p, and q. Pixel values of the pixels e, f, g, j, k, l, o, p, and q are obtained by performing a rounding-off operation using vertical interpolation and performing horizontal interpolation based on pixels resulting from the rounding-off operation. For example, the pixel value of the pixel f is obtained by performing one-dimensional Bicubic interpolation in the above-described manner on the pixel value of the pixel b, the pixel value of the pixel t, a pixel value of a pixel located in a row that is 4*1/4 pixels above a row that contains the pixel b, and a pixel value of a pixel located in a row that is 4*1/4 pixels below a row that contains the pixel t, in which the pixel values on which one-dimensional Bicubic interpolation is to be performed have been obtained through one-dimensional Bicubic interpolation.

Here, the rounding-off operation after vertical interpolation uses (vertically interpolated pixel value + rndCtrlV) >> shiftV and the rounding-off operation after horizontal interpolation uses (horizontally interpolated pixel value + 64 - R) >> 7. Here, R is obtained as described above. shiftV has a value of 1 with respect to the pixel k, has a value of 5 with respect to the pixels e, o, g, and q, and has a value of 3 with respect to the pixels f, j, p, and l. In addition, rndCtrlV = 2^(shiftV - 1) -1 + R.

FIG. 1B is a conceptual view of a block extracted from an 8x8 integer block, for explaining half-pixel interpolation of MPEG-4.

Gray pixels shown in FIG. 1 B indicate integer pixels of the extracted block and have values P(m,n), P(m,n+1), P(m+1,n), and P(m+1,n+1), respectively. Pixel values of pixels a, b, and c are given by (P(m,n) + P(m,n+1) + 1 - rounding_control) >> 1, (P(m,n) + P(m+1,n) + 1 - rounding_control) >> 1, and (P(m,n) + P(m+1,n) + P(m,n+1) + P(m+1,n+1) + 2 - rounding_control) >> 2, respectively. Here, rounding_control is obtained from a header of MPEG-4 video compression data.

FIG. 1C is a conceptual view of a block extracted from an 8x8 integer block, for explaining half-pixel and quarter-pixel interpolation of H.264-Luma.

In H.264, interpolation and prediction are performed in units of various blocks and an operation is performed in minimum units of 4x4 blocks. In FIG. 1C, gray pixels indicate integer pixels, pixels marked with circles indicate 1/2 pixels to be interpolated, and the remaining pixels are 1/4 pixels to be interpolated.

First, half-pixel interpolation will be described. Pixel values P(b) and P(i) of pixels b and i are obtained using bb = (P(m,n-2) - 5*P(m,n-1) + 20*P(m,n) + 20*P(m,n+1) - 5*P(m,n+2) + P(m,n+3)) and ii = (P(m-2,n) - 5*P(m-1,n) + 20*P(m,n) + 20*P(m+1,n) - 5*P(m+2,n) + P(m+3,n)). Thus, P(b) = Clip1Y((bb+16) >> 5) and P(i) = Clip1Y((ii+16) >> 5). Here, Clip1Y is a function indicating a clipping operation. When P(b) can have a value ranging from 0 to 255, if a result of (bb+16) >> 5 falls beyond the range, Clip1Y assigns 0 or 255 to P(b).

Similarly, a pixel value of a pixel k is obtained through vertical interpolation or horizontal interpolation using pixel values of 1/2 pixels obtained through vertical interpolation and horizontal interpolation such as bb and ii.

Next, 1/4-pixel interpolation will be described. Half-pixel interpolation has 6 taps, i.e., 6 weights, but 1/4-pixel interpolation has 2 taps and functions in the same manner as an arithmetic averaging operation.

For example, a pixel value of a pixel a is obtained using P(m,n) and P(b) indicated by arrows and a detailed equation therefor is (P(m,n) + P(b) + 1) >> 1. Similarly, a pixel value P(g) of a pixel g is given by P(g) = (P(b) + P(m) + 1) >> 1. Such an operation is called bilinear interpolation.

FIG. 1D is a conceptual view of a block extracted from an 8x8 integer block for explaining 1/8-pixel interpolation of H.264-Chroma.

In H.264-Chroma, YCbCr = 4:2:0. Gray circles indicate integer pixels and their internal areas are 1/8 pixels to be interpolated. When values of the fractional part of a motion vector are dx and dy, and dx and dy range from 0 to 7, a pixel value at a pixel position corresponding to (dx,dy) is given by ((8-dx)*(8-dy)*P(m,n) + dx*(8-dy)*P(m,n+1) + (8-dx)*dy*P(m+1,n) + dx*dy*P(m+1,n+1) + 32) >> 6.

The interpolation methods described above have many common features such as many redundant operations. In other words, a weighted sum operation using various numbers of weights, a rounding-off operation after the weighted sum operation, and a shift operation after the rounding-off operation are commonly performed in the interpolation methods. Thus, a unit for previously setting a weight vector having 6 taps, which is the maximum number of taps among all the interpolation methods, rounding-off information, and shift amount information as parameters of interpolation and a unit for performing common interpolation operations are designed for use in interpolation of all video compression formats.

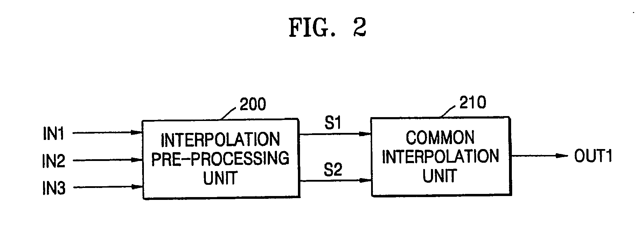

FIG. 2 is a block diagram of a video prediction apparatus for a multi-format codec according to an embodiment of the present invention. Referring to FIG. 2, the video prediction apparatus includes an interpolation pre-processing unit 200 and a common interpolation unit 210.

In a video prediction apparatus that generates a prediction block based on a motion vector and a reference frame according to each of a plurality of video compression formats, the interpolation pre-processing unit 200 receives video compression format information IN1 of a current block to be predicted, extracts a block S1 of a predetermined size to be used for interpolation from a reference frame IN3 using a motion vector IN2, and generates interpolation information S2. Here, the motion vector IN2 is obtained by performing motion vector estimation according to each of a plurality of video compression algorithms and indicates information about the position of a block of the reference frame IN3 which is most similar to the current block to be predicted. The motion vector IN2 includes an integer part and a fractional part. Here, the reference frame IN3 indicates a frame that has been already reconstructed in case of an inter mode. Here, the block S1 of the predetermined size means a portion of the reference frame IN3 required for interpolation of the current block.

Here, the motion vector IN2 includes x-axis information and y-axis information and each of the x-axis information and the y-axis information includes an integer part and a fractional part. The interpolation pre-processing unit 200 extracts the block S1 of the predetermined size using the integer part and the fractional part and generates the interpolation information S2 using the fractional part of the motion vector IN2.

The common interpolation unit 210 interpolates each pixel value of the extracted block S1 or a previously interpolated pixel value in interpolation directions according to the interpolation information S2 to generate the prediction block. Here, the interpolation information S2 includes interpolation mode information indicating whether interpolation is to be performed in a corresponding interpolation direction and operation parameter information required for interpolation in the corresponding interpolation direction. When necessary, the interpolation information S2 may also include relative position information of pixels used for interpolation in the interpolation directions.

Here, the interpolation directions may be, but are not limited to, a vertical direction, a horizontal direction, and a diagonal direction. In other words, if a video compression algorithm to which the present invention is applied is MPEG-4, the interpolation directions would be the vertical direction, the horizontal direction, and the diagonal direction. However, the present invention supporting various interpolation methods by setting parameters at the interpolation pre-processing unit 200 and performing common operations at the common interpolation unit 210 can also be applied to a video compression algorithm in which interpolation is performed in directions other than the interpolation directions described above.

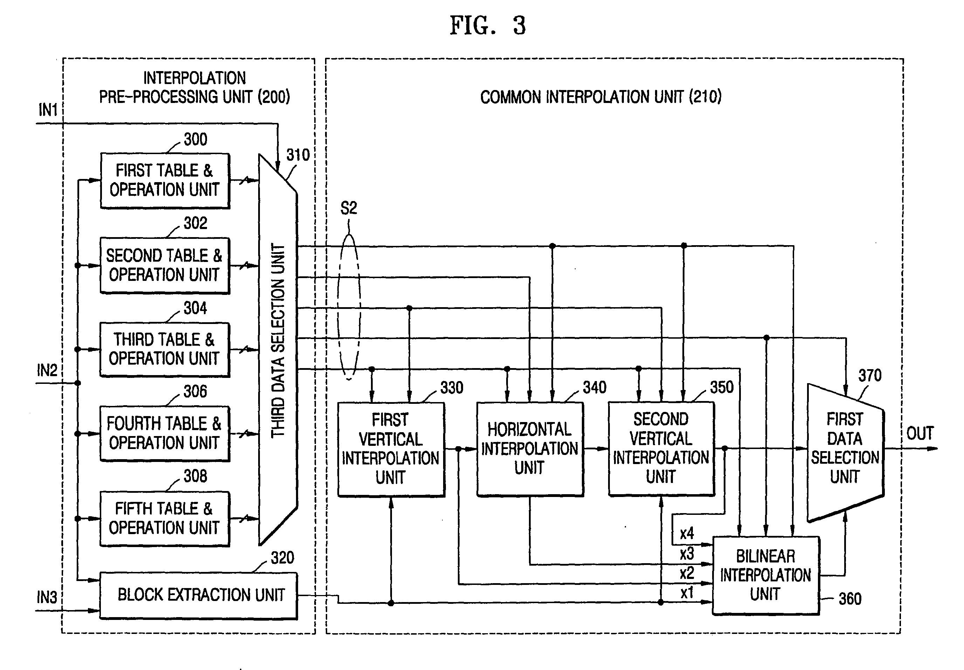

Here, the interpolation mode information includes information regarding whether interpolation is to be performed in a corresponding direction such as the vertical direction, the horizontal direction, or the diagonal direction. When the common interpolation unit 210 is implemented as hardware such as an application specific integrated circuit (ASIC), the interpolation mode information may be expressed as an enable signal corresponding to a unit that performs interpolation. When the common interpolation unit 210 is implemented as software, the interpolation mode information may be expressed as a call to a process of performing interpolation. In particular, in FIG. 3 to be described below, fSelect and fBilinear correspond to the interpolation mode information.

Here, the relative position information of pixels specifies candidates to be actually used for interpolation among a number of pixel candidates. In other words, pixels to be used for interpolation are selected according to the relative position information and a finally interpolated pixel value can be obtained through a weighted sum of the selected pixels. Thus, the relative position information may not be generally required, but it is required especially for 1/4-pixel interpolation of H.264-Luma and is used as a parameter "idirection" to be described later with reference to FIG. 3.

The common interpolation unit 210 determines an interpolation direction using the information regarding whether interpolation is to be performed in a corresponding direction, extracts a plurality of pixel values of an extracted block or previously interpolated pixel values along the determined direction using the relative position information if necessary, and performs an interpolation operation on the plurality of pixel values based on the operation parameter information. Here, the operation parameter information includes at least one of a weight vector including weights applied to pixels, rounding-off information required for a weighted sum operation using the weight, and shift amount information. Instead of any of the weight vector, the rounding-off information, and the shift amount information that is not included in the operation parameter information, a fixed value in the common interpolation unit 200 may be used. Thus, the common interpolation unit 210 performs a weighted sum operation on the plurality of pixel values using the weights, and rounds off the result of the weighted sum operation and performs an integer shift operation using the rounding-off information and the shift amount information. The common interpolation unit 210 may also perform a clipping operation of substituting a predetermined value for data resulting from the integer shift operation and exceeding a predetermined range to prevent a calculation error caused by an overflow and output clipped data. For example, when the resulting data should range from 0 to 255, i.e., should be expressed as 8 bits, the resulting data exceeding 255 is assigned 255 and the resulting data less than 0 is assigned 0.

FIG. 3 is a block diagram of a video prediction apparatus for a multi-format codec which can be used for WMV9-Bilinear, WMV9-Bicubic, MPEG-4, H.264-Luma, and H.264-Chroma. Referring to FIG. 3, overall the video prediction apparatus includes the interpolation pre-processing unit 200 and the common interpolation unit 210 like in FIG. 2.

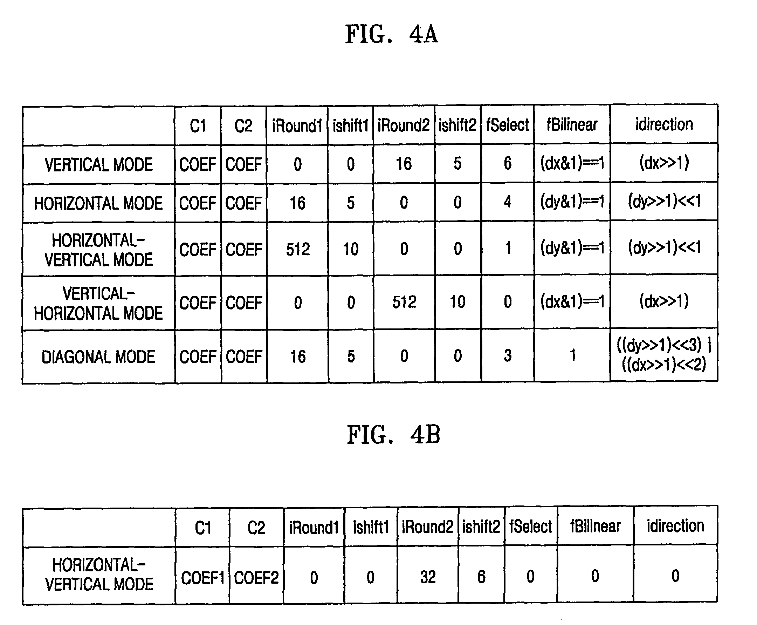

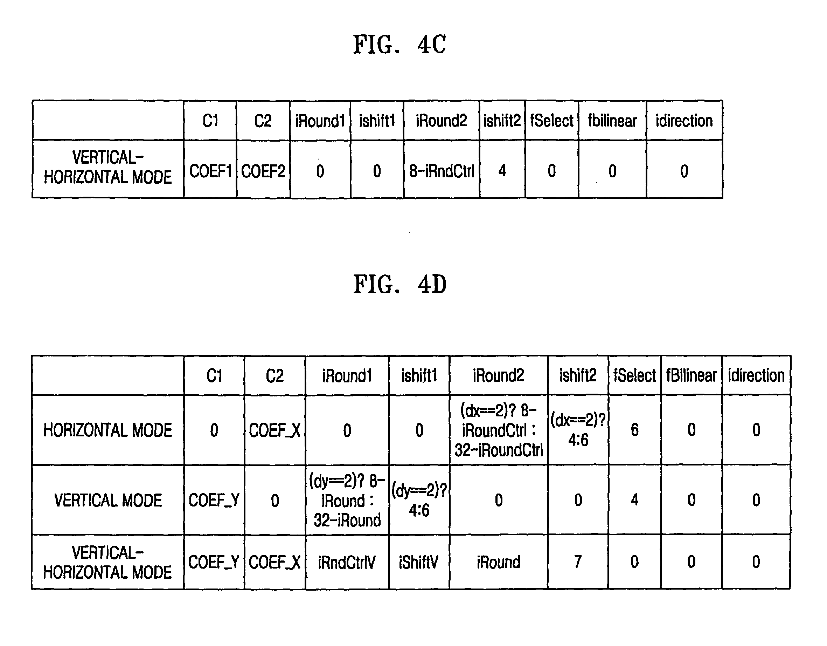

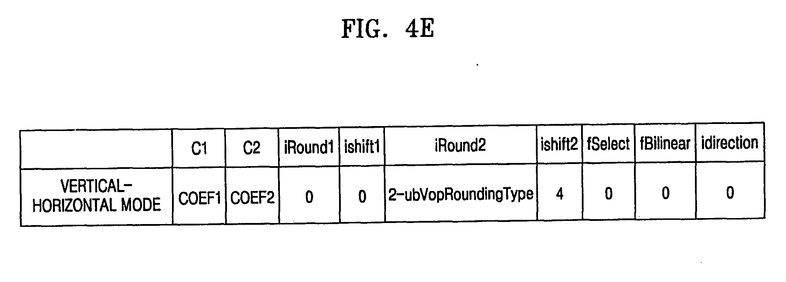

A first table & operation unit 300, a second table & operation unit 302, a third table & operation unit 304, a fourth table & operation unit 306, and a fifth table & operation unit 308 have tables shown in FIGS. 4A, 4B, 4C, 4D, and 4E, respectively, and generate the interpolation information S2 using the fractional part (dx, dy) of the motion vector for H.264-Luma, H.264-Chroma, WMV9-Bilinear, WMV9-Bicubic, and MPEG-4, respectively.

FIGS. 4A through 4E illustrate tables for obtaining interpolation information in H.264-Luma, H.264-Chroma, WMV9-Bilinear, WMV9-Bicubic, and MPEG-4.

Referring to FIG. 4A, dx and dy have values ranging from 0 to 3. Here, COEF = [1, -5, 20, 20,-5, 1]. An interpolation mode is determined according to dx and dy. In other words, fSelect and fBilinear are determined. Referring back to FIG. 1C, the values of dx and dy correspond to the pixels a, b, and c. Here, the pixels a, b, and c correspond to a horizontal mode, i.e., fSelect=6. In other words, dx=1 and dy=0 correspond to the pixel a and fSelect=6 and fBilinear=1. Thus, a horizontal interpolation unit 340 and a bilinear interpolation unit 360 perform interpolation. Similarly, the pixels d, i, and n correspond to a vertical mode, the pixels f, k, and p correspond to a horizontal-vertical mode, the pixels j, k, and I correspond to a vertical-horizontal mode, and the pixels e, g, o, and q correspond to a diagonal mode and fSelect and fBilinear are determined accordingly.

Here, fBilinear has a value of 1 when bilinear interpolation is required for adjacent pixels and has a value of 0 in other cases. Since bilinear interpolation is required in 1/4-pixel interpolation when dx or dy is an odd number, fBilinear has a value of 1. Since 1/2-pixel interpolation is used in other cases of 1/4-pixel interpolation and interpolation has been already completed in horizontal interpolation or vertical interpolation, arithmetic averaging interpolation is not required any more and thus fBilinear has a value of 0.

The interpolation information according to dx and dy, i.e., C1, C2, iRound1, iRound2, iShift1, iShift2, fSelect, fBilinear and idirection are determined based on the tables and are provided to a third data selection unit 310 as an input. Here, in the case of H.264-Luma, an idirection operation is required and the result idirection is used to extract pixels used for interpolation at the horizontal interpolation unit 340, a second vertical interpolation unit 350, and the bilinear interpolation unit 360. A detailed description thereof will be given later.

FIG. 4B illustrates a table for obtaining interpolation information in H.264-Chroma.

Here, COEF1 = [0, 0, 8-dy, dy, 0, 0] and COEF2 = [0, 0, 8-dx, dx, 0, 0] and, in particular, there exists only a vertical-horizontal mode.

FIG. 4C illustrates a table for obtaining interpolation information in WMV9-Bilinear.

Here, COEF1 = [0, 0, 4-dy, dy, 0, 0] and COEF2 = [0, 0, 4-dx, dx, 0, 0] and iRndCtrl has 0 in the case of an I-frame and alternately has 0, 1, 0, 1 in the case of a P-frame as mentioned above.

FIG. 4D illustrates a table for obtaining interpolation information in WMV9-Bicubic. Here, COEF1 = [0, -1, 9, 9, -1, 0], COEF2 = [0, -4, 53, 18, -3, 0], and COEF3 = [0, -3, 18, 53, -4, 0] and C1 and C2 can be obtained using COEF_Y = (dy==2)?COEF1:(dy==1)?COEF2:COEF3 and COEF_X = (dx==2)?COEF:1(dx==1)?COEF2:COEF3. iRound1, iShift1, iRound2, and iShift2 can be obtained using iShiftV = ((dy==2)?4:6) + ((dy==2)?4:6) - 7, iRndCtrlV = (1 << (iShiftV ― 1)) - 1 + iRndCtrl, and iRound = 64 - iRndCtrl.

FIG. 4E illustrates a table for obtaining interpolation information in MPEG-4.

Here, COEF1 = [0, 0, 2-dy, dy, 0, 0] and COEF2 = [0, 0, 2-dx, dx, 0, 0] and ubVopRoundingType is extracted from an MPEG-4 header.

The outputs of the first table & operation unit 300, the second table & operation unit 302, the third table & operation unit 304, the fourth table & operation unit 306, and the fifth table & operation unit 308 are input to the third data selection unit 310, and the third data selection unit 310 selects and outputs interpolation information suitable for a video compression format corresponding to a current block to be predicted using the input video compression format information IN1. The output interpolation information S2 includes fSelect, fBilinear, cal_para_ver, cal_para_hor, and idirection.

A block extraction unit 320 extracts the block S1 of the predetermined size to be used for interpolation from the reference frame using the motion vector and provides the extracted block S1 to the common interpolation unit 210. For example, when a 4x4 block is predicted, the predetermined size means 9x9 further including as many adjacent pixels as the number of taps of a filter, i.e., a 6-tap filter in an embodiment of the present invention.

The common interpolation unit 200 includes a first vertical interpolation unit 330, the horizontal interpolation unit 340, the second vertical interpolation unit 350, the bilinear interpolation unit 360, and a first data selection unit 370.

The first vertical interpolation unit 330 bypasses and outputs a pixel value of the extracted block or outputs a pixel value interpolated through vertical interpolation using the pixel value of the extracted block, according to the interpolation mode information. Here, fSelect of the interpolation mode information is used by the first vertical interpolation unit 330.

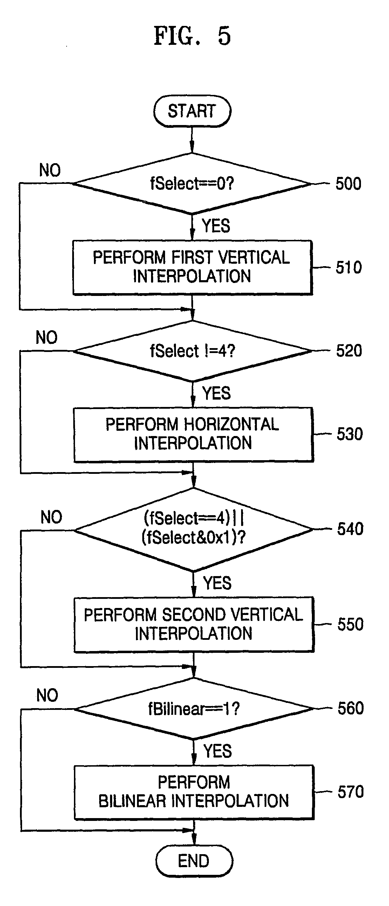

FIG. 5 is a flowchart illustrating a process of determining whether a corresponding interpolation unit performs interpolation according to interpolation mode information (fSelect and fBilinear).

When fSelect is 0 in operation 500, the first vertical interpolation unit 330 performs interpolation in operation 510. When fSelect is not 0 in operation 500, a process goes to operation 520.

In operation 520, it is determined whether fSelect is 4. When fSelect is not 4, the horizontal interpolation unit 340 performs interpolation in operation 530. If fSelect is 4, the process goes to operation 540.

In operation 540, it is determined whether fSelect is 4 or an odd number. When fSelect is 4 or an odd number, the second vertical interpolation unit 350 performs interpolation in operation 550. Next, it is determined whether fBilinear is 1 in operation 560. When fBilinear is 1, the bilinear interpolation unit 360 performs interpolation in operation 570. When fBilinear is 0, the bilinear interpolation unit 360 is terminated without performing interpolation.

In other words, when fSelect is not 0, the first vertical interpolation unit 330 bypasses the extracted block S1 to the horizontal interpolation unit 340 without performing interpolation. When fSelect is 0, the first vertical interpolation unit 330 performs vertical interpolation using the extracted block S1. At this time, the interpolation uses operation parameter information cal_para_ver including C1, iRound1, and iShift1. In other words, when pixel values of 6 vertical pixels of the extracted block S1 are a1, a2, a3, a4, a5, and a6 and weight elements of C1 are c1, c2, c3, c4, c5, and c6, an interpolated pixel value is (c1*a1+c2*a2+c3*a3+c4*a4+c5*a5+c6*a6+iRound1) >> iShift1.

The horizontal interpolation unit 340 bypasses and outputs the output of the first vertical interpolation unit 330 or performs horizontal interpolation using the output of the first vertical interpolation unit 330, according to the interpolation mode information. Here, the interpolation mode information used in the horizontal interpolation unit 340 is fSelect between fSelect and fBilinear. In other words, like in FIG. 5, when fSelect is 4, the horizontal interpolation unit 340 bypasses and outputs the output of the first vertical interpolation unit 330. When fSelect is not 4, the horizontal interpolation unit 340 performs horizontal interpolation using the output of the first vertical interpolation unit 330. At this time, the interpolation uses cal_para_hor including C2, iRound2, and iShift2. Similarly, C2 indicates a weight vector, iRound2 indicates rounding-off information, and iShift2 indicates integer shift amount information. In H.264-Luma, idirection may not be 0000. When idirection is 0000, the initial coordinates of a pixel used for interpolation are used. When the first bit of idirection is 1, i.e., idirection takes the form of 1XXX, the initial coordinates of the pixel is increased by 1 with respect to a Y-axis and then interpolation is performed. A detailed description thereof will be given later.

The second vertical interpolation unit 350 bypasses and outputs the output of the horizontal interpolation unit 340 or performs vertical interpolation using a pixel value of the extracted block or the output of the horizontal interpolation unit 340, according to the interpolation mode information.

When fSelect is 0 or 6, the second vertical interpolation unit 350 bypasses and outputs the output of the horizontal interpolation unit 340. When fSelect is 1, 3, or 4, the second vertical interpolation unit 350 performs vertical interpolation. In vertical interpolation, one of the extracted block S1 and the output of the horizontal interpolation unit 340 is selected as an input pixel group, i.e., a block. In a vertical mode where fSelect is 3, the second vertical interpolation unit 350 performs vertical interpolation using the extracted block S1. When fSelect is 1 or 4, the second vertical interpolation unit 350 performs vertical interpolation using the output of the horizontal interpolation unit 340. The second vertical interpolation unit 350 also performs an interpolation operation using the same parameter cal_para_ver as used in the first vertical interpolation unit 330. Like the first vertical interpolation unit 330, the second vertical interpolation unit 350 also selects a pixel to be used for interpolation using idirection, i.e., the relative position information. When the second bit of idirection is 1, i.e., when idirection takes a form of X1XX, the initial coordinates of the pixel to be used for interpolation are increased by 1 with respect to an X-axis and then interpolation is performed. A detailed description thereof will be given later.

The bilinear interpolation unit 360 extracts two pixels adjacent to a pixel to be interpolated from pixels of the extracted block and the interpolated pixel and performs arithmetic averaging interpolation on the extracted two pixels.

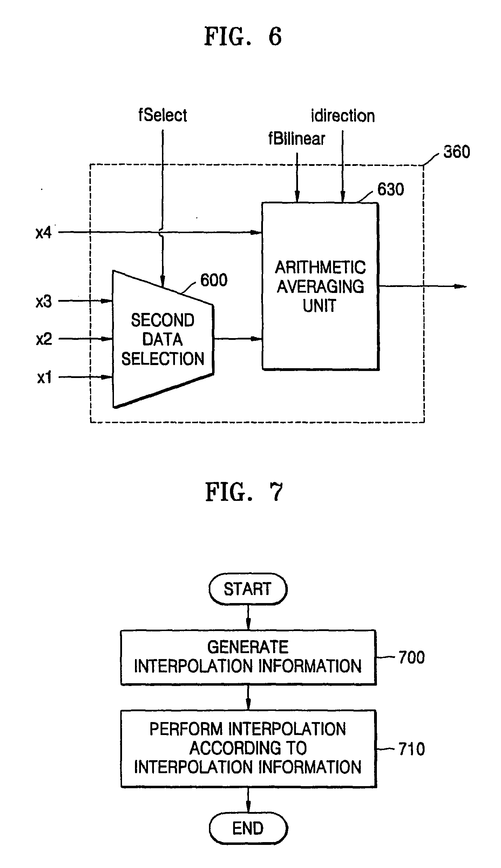

FIG. 6 is a block diagram of the bilinear interpolation unit 360 according to an embodiment of the present invention. The bilinear interpolation unit 360 includes a second data selection unit 600 and an arithmetic averaging unit 630.

The second data selection unit 600 selects one of a pixel value x1 of the extracted block, an output x2 of the first vertical interpolation unit 330, and an output x3 of the horizontal interpolation unit 340 and outputs the selected data. Here, x1 is equal to S1.

x1 is selected when fSelect is 4 or 6, x3 is selected when fSelect is 0, and x2 is selected when fSelect is 1 or 3. The selected data is provided to the arithmetic averaging unit 630.

The second vertical interpolation unit 350 and the second data selection unit 600 perform a clipping operation of substituting a predetermined value for interpolated data or selected data exceeding a predetermined range and output clipped data. The clipping operation is as described above.

When fBilinear is 1, the arithmetic averaging unit 630 performs arithmetic averaging on the output(x4) of the second vertical interpolation unit 350 and the output of the second data selection unit 600 and outputs resulting data. When fBilinear is 0, the arithmetic averaging unit 630 does not need to perform arithmetic averaging. In other words, when the output of the second vertical interpolation unit 350 and the output of the second data selection unit 600 are a and b, the arithmetic averaging unit 630 outputs (a+b+1) >> 1. When the third bit of idirection is 1, i.e., when idirection takes a form of XX1X, the initial coordinates of a pixel to be used for interpolation are increased by 1 with respect to the Y-axis and then interpolation is performed. When the fourth bit of idirection is 1, i.e., when idirection takes a form of XXX1, the initial coordinates of the pixel to be used for interpolation are increased by 1 with respect to the X-axis and then interpolation is performed.

The first data selection unit 370 selects the output(x4) of the second vertical interpolation unit 350 or the output of the bilinear interpolation unit 360 according to the interpolation mode information, and outputs the selected data as a pixel value of a prediction block. At this time, the interpolation mode information used in the first data selection unit 370 is fBilinear. When fBilinear is 1, the output of the bilinear interpolation unit 360 is selected. When fBilinear is 0, the output of the second vertical interpolation unit 350 is selected.

FIG. 7 is a flowchart illustrating a video prediction method for a multi-format codec according to an embodiment of the present invention.

In operation 700, the video compression format information IN1 of a current block to be predicted, the motion vector IN2, and the reference frame IN3 are input to the interpolation pre-processing unit 200, and the interpolation pre-processing unit 200 extracts the block S1 of the predetermined size to be used for interpolation from the reference frame IN3 and generates the interpolation information S2, using the motion vector IN2. Here, the interpolation information S2 includes the interpolation mode information indicating whether interpolation is to be performed in a corresponding interpolation direction and the operation parameter information required for interpolation in the corresponding interpolation direction.

In operation 710, a pixel value of the extracted block S1 or a previously interpolated pixel value is interpolated by the common interpolation unit 210 in an interpolation direction according to the interpolation information S2, thereby generating a prediction block OUT1. In other words, the interpolation direction is determined using the interpolation mode information, a plurality of pixel values of the extracted block or previously interpolated pixel values are extracted along the determined interpolation direction, and interpolation is performed on the extracted pixel values according to the operation parameter information, thereby obtaining a pixel value included in the prediction block OUT1.

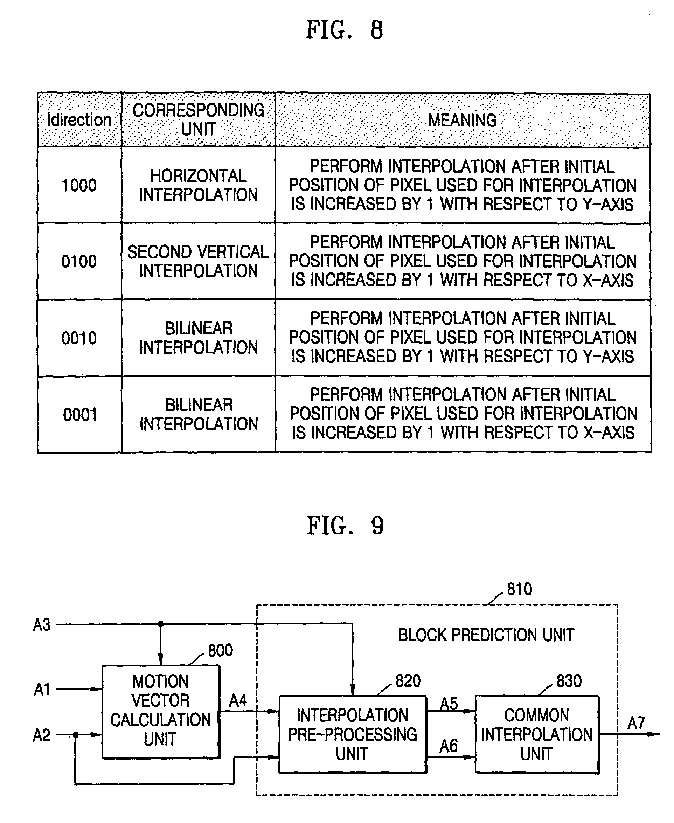

FIG. 8 illustrates a table indicating idirection used in interpolation units. Idirection is used for interpolation of H.264-Luma, i.e., 1/4-pixel interpolation. When idirection is 1000, the horizontal interpolation unit 340 increases the initial coordinates of a pixel of an input block used for interpolation by 1 with respect to the Y-axis, extracts a pixel value used for interpolation, and then performs interpolation. When idirection is 0100, the second vertical interpolation unit 350 increases the initial coordinates of a pixel of an input block used for interpolation by 1 with respect to the X-axis, extracts a pixel value used for interpolation, and then performs interpolation. When idirection is 0010, the bilinear interpolation unit 360 increases the initial coordinates of a pixel of an input block used for interpolation by 1 with respect to the Y-axis and then performs interpolation. When idirection is 0001, the bilinear interpolation unit 360 increases the initial coordinates of a pixel of an input block used for interpolation by 1 with respect to the X-axis, extracts a pixel value used for interpolation, extracts a pixel value used for interpolation, and then performs interpolation.

To explain such a configuration, a case where the fractional part of a motion vector is dx=3 and dy=1 in H.264-Luma will be taken as an example with reference to FIG. 1C.

In this case, since diagonal interpolation is performed, fSelect = 3, C1 = [1, -5, 20, 20, -5, 1], C2 = [1, -5, 20, 20, -5, 1], iRound1 = 16, iShift1 = 5, iRound2=0, iShift2 = 0, fBilinear = 1, and idirection = 0100. Since fSelect is 3, the first vertical interpolation unit 330 bypasses a pixel value of the extracted block to the horizontal interpolation unit 340. Since fSelect is 3, the horizontal interpolation unit 340 performs horizontal interpolation on the pixel b using input P(m, n) and P(m, n+1). At this time, since idirection is 0100, P(m, n) and P(m, n+1) are selected. When idirection is 1000, P(m+1, n) and P(m+1, n+1) would be selected.

Since idirection is 0100, the second vertical interpolation unit 350 increase the position of a pixel used for interpolation by one integer pixel and performs vertical interpolation using P(m, n+1) and P(m+1, n+1) instead of P(m, n) and P(m+1, n), thereby outputting a value of m. Since fSelect is 3, the second data selection unit 600 selects the pixel b that is the output of the horizontal interpolation unit 340 and outputs the same. Since fBilinear is 1, the arithmetic averaging unit 430 performs bilinear interpolation. Since fBilinear is 1, the first data selection unit 370 selects the output of the bilinear interpolation unit 360 and the selected data is output as a prediction block.

A case where dx=3 and dy=3 in H.264-Luma is similar to the case where dx=1 and dy=3 in H.264-Luma, but since idirection = 1100, interpolation of the horizontal interpolation unit 340 and the second vertical interpolation unit 350 is performed after the position of a pixel used for the interpolation is increased by one integer pixel. In other words, the horizontal interpolation unit 340 uses P(m+1, n) and P(m+1, n+1) instead of P(m, n) and P(m, n+1) and the second vertical interpolation unit 350 uses P(m, n+1) and P(m+1, n+1) instead of P(m, n) and P(m+1, n).

An operation for a case where dx=1 and dy=3 in WMV9-Bicubic will be described.

COEF_X = [0, -4, 53, 18, -3, 0] because dx = 1, COEF_Y = [0, -3, 18, 53, -4, 0] because dy = 3, C1 = COEF_Y, and C2 = COEF_X. iShiftV is 12 - 7 = 5 and iRndCtrlV is 16 - 1 + 0 = 15. iRound is 64 - 15 = 29. All values of a table are obtained through such an operation. In this case, since fSelect is 0, the first vertical interpolation unit 330 and the horizontal interpolation unit 340 perform interpolation.

To obtain a pixel value of a pixel n, P(m-2,n), P(m-1,n), P(m,n), P(m+1,n), P(m+2,n), and P(m+3,n) among inputs of the first vertical interpolation unit 330 are extracted and a weighted sum thereof is obtained. Next, inputs of the horizontal interpolation unit 340 are interpolated using pixels separated by integer pixels to the left and right sides of the pixel n. Thus, a pixel value of the pixel o is obtained.

The output of the horizontal interpolation unit 340 is used as an input of the second vertical interpolation unit 350. Since fSelect is 0, the second vertical interpolation unit 350 bypasses input data without performing interpolation. Since fBilinear is 0, the bypassed data is output as a pixel value of a prediction block.

Next, interpolation for a case where dx=2 and dy=1 in H.264-Luma will be described.

In this case, since a horizontal-vertical mode is applied, fSelect = 1. Thus, the horizontal interpolation unit 340 and the second vertical interpolation unit 350 operate. In this case, the output of the horizontal interpolation unit 340 is, for example, the pixel b and the second vertical interpolation unit 350 obtains the pixel i using the pixel b. The pixel values of the pixels b and i are interpolated by the bilinear interpolation unit 360, thereby obtaining a pixel value of the pixel f.

FIG. 9 is a block diagram of a video encoder for a multi-codec format according to an embodiment of the present invention. The video encoder includes a motion vector calculation unit 800 and a block prediction unit 810.

The motion vector calculation unit 800 calculates a motion vector A4 by performing block-based motion estimation between a reference frame A2 and a current block A1 to be encoded. Here, the reference frame A2 is obtained by reconstructing a previously encoded frame. When a motion vector calculation process varies with video compression formats, video compression format information A3 is required and is provided as an input of the motion vector calculation unit 800.

The block prediction unit 810 includes an interpolation pre-processing unit 820 and a common interpolation unit 830.

The interpolation pre-processing unit 820 receives the video compression format information A3 of the current block, extracts a block A5 of a predetermined size to be used for interpolation from the reference frame A2, and generates interpolation information A6. A detailed description thereof is as follows.

The common interpolation unit 830 interpolates a pixel value of the extracted block A5 or a previously interpolated pixel value in an interpolation direction according to the interpolation information A6 to generate a prediction block A7.

A difference between the generated prediction block A7 and the current block A1 is residual data and the residual data, together with the motion vector information A4 and the video compression format information A3, is transmitted as an output of the video encoder through predetermined encoding or transformation. A component that generates the residual data and performs predetermined encoding or transformation or a configuration for generating the reference frame may vary in a multi-format codec and thus is not shown in FIG. 9.

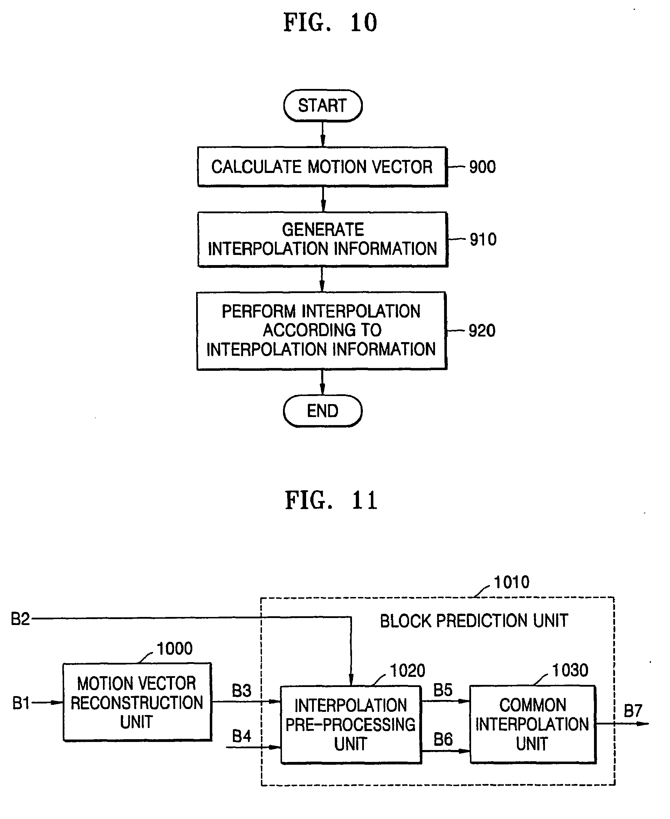

FIG. 10 is a flowchart illustrating a video encoding method for a multi-codec format according to an embodiment of the present invention.

In operation 900, the motion vector calculation unit 800 calculates the motion vector A4 through block-based motion estimation between the reference frame A2 and the current block A1. When a motion vector calculation process varies with video compression formats, the video compression format information A3 is required and is provided as an input of the motion vector calculation unit 800.

In operation 910, the interpolation pre-processing unit 820 receives the video compression format information A3 of the current block, extracts the block A5 of the predetermined size to be used for interpolation from the reference frame A2, and generates the interpolation information A6.

In operation 920, the common interpolation unit 830 generates a prediction block A7 based on the extracted block A5 and the interpolation information A6.

The residual data that is a difference between the prediction block and the current block is calculated after operation 920 and the calculated residual data, together with the motion vector information, is transmitted as an output of the video encoder through encoding or transformation if necessary.

FIG. 11 is a block diagram of a video decoder for a multi-codec format according to an embodiment of the present invention. The video decoder includes a motion vector reconstruction unit 1000 and a block prediction unit 1010.

The motion vector reconstruction unit 1000 reconstructs a motion vector B3 from a received bitstream B1.

The block prediction unit 1010 includes an interpolation pre-processing unit 1020 and a common interpolation unit 1030.

The interpolation pre-processing unit 1020 receives video compression formation information B2 of a current block to be predicted, and extracts a block B5 of a predetermined size to be used for interpolation from a reference frame B4 and generates interpolation information B6, using the motion vector B3. Here, the video compression format information B2 of the current block may be loaded in received data or may be provided to the video decoder through a separate control channel.

The common interpolation unit 1030 interpolates a pixel value of the extracted block B5 or a previously interpolated pixel value in an interpolation direction according to the interpolation information B6, thereby generating a prediction block B7.

A current frame is reconstructed using residual data reconstructed from received data, the motion vector information B3, and the prediction block B7. The reference frame B4 is a previously reconstructed frame. Since such a reconstruction process may vary with video compression formats, a configuration thereof is not shown in FIG. 11.

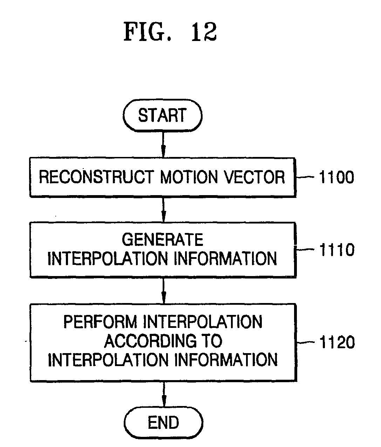

FIG. 12 is a flowchart illustrating a video decoding method for a multi-codec format according to an embodiment of the present invention.

In operation 1100, the motion vector reconstruction unit 1000 reconstructs the motion vector B3 from the received bitstream B1.

In operation 1110, the interpolation pre-processing unit 1020 receives the video compression format information B2 of the current block to be predicted, and extracts the block B5 of the predetermined size to be used for interpolation from the reference frame B4 and generates the interpolation information B6 using the motion vector B3.

In operation 1120, the common interpolation unit 1030 interpolates a pixel value of the extracted block B5 or a previously interpolated pixel value in an interpolation direction according to the interpolation information B6 to generate the prediction block B7. A current frame is reconstructed using residual data reconstructed from received data, the motion vector information B3, and the prediction block B7. Since such a reconstruction process may vary with video compression formats, a detailed process thereof is not shown in FIG. 12.

According to the present invention, in the implementation of an encoder/decoder for various video compression algorithms, i.e., a multi-format codec, interpolation common to the video compression formats is used, thereby minimizing the time and cost required for the implementation. Moreover, when the encoder/decoder is implemented as hardware such as an ASIC, the size of hardware can be minimized.

Meanwhile, the present invention can be embodied as code that is readable by a computer on a computer-readable recording medium. The computer-readable recording medium includes all kinds of recording devices storing data that is readable by a computer system. Examples of the computer-readable recording medium include read-only memory (ROM), random access memory (RAM), CD-ROMs, magnetic tapes, floppy disks, optical data storage devices, and carrier waves such as transmission over the Internet. The computer readable recording medium can also be distributed over network coupled computer systems so that the computer readable code is stored and executed in a distributed fashion. Also, functional programs, code, and code segments for implementing the present invention can be easily construed by programmers skilled in the art.

Although a few embodiments of the present invention have been shown and described, it would be appreciated by those skilled in the art that changes may be made in these exemplary embodiments without departing from the principles of the invention, the scope of which is defined in the claims and their equivalents.

## Claims

1. A video prediction apparatus for a multi-format codec, which generates a prediction block based on a motion vector (IN2) and a reference frame (IN3) according to each of a plurality of video compression formats, the video prediction apparatus comprising:
an interpolation pre-processing unit (200) arranged to receive video compression format information (IN1) on a current block to be predicted, to extract a block (S1) of a predetermined size to be used for interpolation from the reference frame (IN3) using the motion vector (IN2) and to generate interpolation information (S2); and
a common interpolation unit (210) arranged to interpolate a pixel value of the extracted block (S1) or a previously interpolated pixel value in an interpolation direction according to the interpolation information (S2) to generate the prediction block.

2. The video prediction apparatus of claim 1, wherein the interpolation pre-processing unit (200) is arranged to extract the block (S1) of the predetermined size using an integer part and a fractional part of the motion vector and to generate the interpolation information (S2) using the fractional part of the motion vector (IN2).

3. The video prediction apparatus of claim 1 or 2, wherein the interpolation information (S2) includes interpolation mode information indicating whether interpolation is to be performed in a corresponding interpolation direction and operation parameter information required for interpolation in the corresponding interpolation direction, and
the common interpolation unit (210) is arranged to determine an interpolation direction using the interpolation mode information, to extract a plurality of pixel values of the extracted block (S1) or previously interpolated pixel values along the determined interpolation direction, and to perform interpolation on the extracted plurality of pixel values according to the operation parameter information, thereby calculating a pixel value included in the prediction block.

4. The video prediction apparatus of claim 3, wherein the interpolation information (S2) further includes relative position information of pixels used for interpolation in the corresponding interpolation direction, and
the common interpolation unit (210) is arranged to extract the plurality of pixel values of the extracted block or previously interpolated pixel values using the relative position information.

5. The video prediction apparatus of claim 4, wherein the operation parameter information includes at least one of a weight vector including weights applied to pixels used for interpolation in the corresponding interpolation direction, rounding-off information required for a weighted sum operation using the weights, and shift amount information, and
the common interpolation unit (210) is arranged to perform the weighted sum operation by applying the weights to the extracted plurality of pixel values, to round-off the result of the weighted sum operation and to perform an integer shift operation using the rounding-off information and the shift amount information in the corresponding interpolation direction.

6. The video prediction apparatus of claim 5, wherein the common interpolation unit (210) is arranged to perform a clipping operation of substituting a predetermined value for data resulting from the integer shift operation and exceeding a predetermined range and to output clipped data.

7. The video prediction apparatus of claim 5 or 6, wherein the common interpolation unit (210) comprises:
a first vertical interpolation unit (330) which is arranged to perform one of bypassing and outputting a pixel value of the extracted block and outputting a pixel value interpolated through vertical interpolation using the pixel value of the extracted block, according to the interpolation mode information; and
a horizontal interpolation unit (340) which is arranged to perform one of bypassing and outputting an output of the first vertical interpolation unit and performing horizontal interpolation using an output of the first vertical interpolation, according to the interpolation mode information,
wherein the first vertical interpolation unit (330) and the horizontal interpolation unit (340) are arranged to perform interpolation according to the operation parameter information.

8. The video prediction apparatus of claim 7, wherein the common interpolation unit (210) comprises:
a second vertical interpolation unit (350) which is arranged to perform one of bypassing and outputting an output of the horizontal interpolation unit (340) and to perform vertical interpolation using the pixel value of the extracted block or an output of the horizontal interpolation unit (340), according to the interpolation mode information;
a bilinear interpolation unit (360) which is arranged to extract two pixels adjacent to a pixel to be interpolated from pixels of the extracted block and interpolated pixels according to the interpolation mode information, and to perform arithmetic averaging interpolation on the extracted two pixels; and
a first data selection unit (370) arranged to select an output of the second vertical interpolation unit (350) or an output of the bilinear interpolation unit (360) according to the interpolation mode information and to output the selected data as a pixel value of a prediction block,
wherein the second vertical interpolation unit (350) is arranged to perform interpolation using operation parameter information that is the same as used in the first vertical interpolation unit (330).

9. The video prediction apparatus of claim 8, wherein the bilinear interpolation unit (360) comprises:
a second data selection unit (600) arranged to select the pixel value of the extracted block, the output of the first vertical interpolation unit (330), or the output of the horizontal interpolation unit (340) according to the interpolation mode information, and to output the selected data; and
an arithmetic averaging unit (630) arranged to extract the two pixels from the output of the second data selection unit (600) and the output of the second vertical interpolation unit (350) and to perform arithmetic averaging on the extracted two pixels.

10. The video prediction apparatus of claim 8 or 9, wherein the horizontal interpolation unit (340), the second vertical interpolation unit (350), and the bilinear interpolation unit (360) are arranged to extract a pixel to be used for interpolation using the relative position information.

11. The video prediction apparatus of claim 9 or 10, wherein the second vertical interpolation unit (350) is arranged to perform a clipping operation of substituting a predetermined value for the pixel value of the extracted block or the vertically interpolated pixel value exceeding a predetermined range, and to output clipped data, and
the second data selection unit (600) is arranged to perform a clipping operation of substituting a predetermined value for the selected data exceeding a predetermined range, and to output clipped data.

12. The video prediction apparatus of any of claims 5 to 11, wherein the weight vector with respect to the corresponding interpolation direction includes six weight elements.

13. The video prediction apparatus of any of claims 7 to 12, wherein the plurality of video compression formats includes at least one of WMV9-Bilinear, WMV9-Bicubic, MPEG-4, H.264-Luma, and H.264-Chroma.

14. A video encoder for a multi-format codec, the video encoder comprising:
a motion vector calculation unit (800) arranged to calculate a motion vector (A4) by performing block-based motion estimation between a reference frame (A2) and a current block (A1) to be encoded; and
a block prediction unit (810) arranged to generate a prediction block based on the calculated motion vector (A4) and the reference frame (A2),
wherein the block prediction unit (810) includes:
an interpolation pre-processing unit (820) arranged to receive video compression format information (A3) of a current block to be predicted, to extract a block (A5) of a predetermined size to be used for interpolation from the reference frame (A2) and to generate interpolation information (A6) using the motion vector (A4); and
a common interpolation unit (830) arranged to interpolate a pixel value of the extracted block (A5) or a previously interpolated pixel value in an interpolation direction according to the interpolation information (A6) to generate the prediction block (A7).

15. A video decoder for a multi-format codec, the video decoder comprising:
a motion vector extraction unit arranged to reconstruct a motion vector from a received bitstream; and
a block prediction unit arranged to generate a prediction block based on the reconstructed motion vector, a received video compression format information and a reference frame.

16. The video decoder of claim 15, wherein the block prediction unit; further comprises:
an interpolation pre-processing unit arranged to receive video compression format information of a current block to be predicted, to extract a block of a predetermined size to be used for interpolation from the reference frame and to generate interpolation information using the motion vector; and
a common interpolation unit arranged to interpolate a pixel value of the extracted block or a previously interpolated pixel value in an interpolation direction according to the interpolation information to generate the prediction block.

17. A video prediction method for a multi-format codec, in which a prediction block is generated based on a motion vector (IN2) and a reference frame (IN3) according to a plurality of video compression formats, the video prediction method comprising:
receiving video compression format information (IN1) of a current block to be predicted, and extracting a block (S1) of a predetermined size to be used for interpolation from the reference frame (IN3) and generating interpolation information using the motion vector; and
interpolating a pixel value of the extracted block (S1) or a previously interpolated pixel value in an interpolation direction according to the interpolation information (S2) to generate the prediction block.

18. The video prediction method of claim 17, wherein the interpolation information (S2) includes interpolation mode information indicating whether interpolation is to be performed in a corresponding interpolation direction and operation parameter information required for interpolation in the corresponding interpolation direction, and
the interpolation of the pixel value includes determining an interpolation direction using the interpolation mode information, extracting a plurality of pixel values of the extracted block (S1) or previously interpolated pixel values along the determined interpolation direction, and performing interpolation on the extracted plurality of pixel values according to the operation parameter information, thereby calculating a pixel value included in the prediction block.

19. The video prediction method of claim 18, wherein the interpolation information (S2) further includes relative position information of pixels used for interpolation in the corresponding interpolation direction, and
the interpolation of the pixel value includes extracting the plurality of pixel values of the extracted block or previously interpolated pixel values using the relative position information.

20. The video prediction method of claim 19, wherein the operation parameter information includes at least one of a weight vector including weights applied to pixels used for interpolation in the corresponding interpolation direction, rounding-off information required for a weighted sum operation using the weights, and shift amount information, and
the interpolation of the pixel value includes performing the weighted sum operation by applying the weights to the extracted plurality of pixel values, and rounding-off the result of the weighted sum operation and performing an integer shift operation using the rounding-off information and the shift amount information in the corresponding interpolation direction.

21. The video prediction method of claim 20, wherein the interpolation of the pixel value includes performing a clipping operation of substituting a predetermined value for data resulting from the integer shift operation and exceeding a predetermined range and outputting clipped data.

22. A video encoding method for a multi-format codec, the video encoding method comprising:
calculating a motion vector (A4) by performing block-based motion estimation between a reference frame (A2) and a current block (A1) to be encoded; and
generating a prediction block based on the calculated motion vector (A4) and the reference frame (A2),
wherein the generation of the prediction block includes:
receiving video compression format information (A3) of a current block to be predicted, and extracting a block (A5) of a predetermined size to be used for interpolation from the reference frame (A2) and generating interpolation information (A6) using the motion vector (A4); and
interpolating a pixel value of the extracted block (A5) or a previously interpolated pixel value in an interpolation direction according to the interpolation information (A6) to generate the prediction block (A7).

23. A video decoding method for a multi-format codec, the video decoding method comprising:
receiving a format information (IN1) of a current block to be predicted;
reconstructing a motion vector (IN2) from a received bitstream; and
generating a prediction block based on the reconstructed motion vector (IN2), the received format information (IN1) and a reference frame (IN3).

24. The video decoding method of claim 23, the wherein the generation of the prediction block includes:
extracting a block of a predetermined size to be used for interpolation from the reference frame and generating interpolation information using the motion vector; and
interpolating a pixel value of the extracted block or a previously interpolated pixel value in an interpolation direction according to the interpolation information to generate the prediction block.

25. A computer program comprising computer code means adapted to perform all the steps of any of claims 17 to 24 when said program is run on a computer.

26. A computer program as claimed on claim 25 embodied on a computer readable medium.
